(19) Europäisches Patentamt
European Patent Office
Office européen des brevets

(11) **EP 2 874 414 A1**

(12) **EUROPEAN PATENT APPLICATION**

(43) Date of publication:
**20.05.2015 Bulletin 2015/21**

(51) Int Cl.:
***H04S 7/00*** (2006.01)

(21) Application number: **14191992.8**

(22) Date of filing: **06.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.11.2013 GB 201320196**

(71) Applicant: **Nokia Corporation**
**02610 Espoo (FI)**

(72) Inventor: **Ojanperä, Juha**
**37120 Nokia (FI)**

(74) Representative: **Nokia Corporation**
**Intellectual Property Department**
**Karakaari 7**
**02610 Espoo (FI)**

(54) **Handling overlapping audio recordings**

(57)    Apparatus is configured to:
for each of multiple segments of a timeline for which at least two time-overlapping audio recordings exist, calculate an ambience factor for each of the overlapping audio recordings for the segment;
for each of the multiple segments of the timeline, use the ambience factors calculated for the overlapping audio recordings to select an audio type for the segment; and
create a composition signal for the timeline, the composition signal having for each segment the audio type that is selected for the segment.

Figure 5

Figure 6

**Description**

**Field of the Invention**

This invention relates to handling overlapping audio recordings.

**Background to the Invention**

It is known to distribute devices around an audio space and use them to record an audio scene. Captured signals are transmitted and stored at a rendering location, from where an end user can select a listening point based on their preference from the reconstructed audio space. This type of system presents numerous technical challenges.

In order to create an immersive sound experience, the content to be rendered must first be aligned. If multiple devices start recording an audio visual scene at different times from different perspectives, then it cannot be easily determined whether they are in fact recording the same scene.

Alignment can be achieved using a dedicated synchronization signal to time stamp the recordings. The synchronization signal can be some special beacon signal (e.g., clappers) or timing information obtained through GPS satellites. The use of a beacon signal typically requires special hardware and/or software installations, which limits the applicability of multi-user sharing service. GPS is a good solution for synchronization but is available only when a GPS receiver is present in the recording devices and is rarely available in indoor environments due to attenuation of the GPS signals.

Alternatively, various methods of correlating audio signals can be used for synchronization of those signals.

Another class of synchronization is to use NTP (Network Time Protocol) for time stamping the recorded content from multiple users. In this case, the local device clocks are synchronized against the NTP reference, which is global.

**Summary of Embodiments of the Invention**

A first aspect of embodiments of the invention provides apparatus configured to:

for each of multiple segments of a timeline for which at least two time-overlapping audio recordings exist, calculate an ambience factor for each of the overlapping audio recordings for the segment;
for each of the multiple segments of the timeline, use the ambience factors calculated for the overlapping audio recordings to select an audio type for the segment; and
create a composition signal for the timeline, the composition signal having for each segment the audio type that is selected for the segment.

The audio type may be indicative of a number of audio channels.

The apparatus may be configured to create the composition signal with different audio types for different segments of the timeline.

The apparatus may be configured to analyse audio recordings to identify low quality audio recordings and/or audio recordings including artifacts and to disregard any such identified audio recordings when using the ambience factors calculated for the overlapping audio recordings to select an audio type for the segment.

The apparatus may be configured to use the ambience factors calculated for the overlapping audio recordings to select an audio type for the segment by determining whether the ambience factor for the audio recordings exceeds a threshold.

The apparatus may be configured to adjust the threshold based on an analysis of the resulting audio type sequence and to determine whether the ambience factor for the audio recordings exceeds the adjusted threshold.

The apparatus may be configured to create the composition signal for a segment of the timeline by mixing multiple audio recordings for the segment.

The apparatus may be configured to create the composition signal for a segment of the timeline by selecting one of multiple audio recordings for the segment.

The apparatus may be configured to create the composition signal for a segment of the timeline by downmixing one or more audio recordings for the segment to the audio type selected for the segment.

The apparatus may be configured to calculate an ambience factor for an audio recording by:

transforming the audio signal to a frequency domain representation; and
processing the frequency domain representations for multiple audio recordings and for multiple segments.

The apparatus may be configured to calculate a sound image direction for an audio recording that is of a stereo or spatial audio type.

The apparatus may be configured to determine an ambience value for each of multiple directions for an audio recording and using the ambience values for the multiple directions for a time period to calculate an ambience factor for the audio recording for the time period.

A second aspect of embodiments of the invention provides a method comprising:

for each of multiple segments of a timeline for which at least two time-overlapping audio recordings exist, calculating an ambience factor for each of the overlapping audio recordings for the segment;

for each of the multiple segments of the timeline, using the ambience factors calculated for the overlapping audio recordings to select an audio type for the segment; and

creating a composition signal for the timeline, the composition signal having for each segment the audio type that is selected for the segment.

The audio type may be indicative of a number of audio channels.

The method may comprise creating the composition signal with different audio types for different segments of the timeline.

The method may comprise analysing audio recordings to identify low quality audio recordings and/or audio recordings including artifacts and disregarding any such identified audio recordings when using the ambience factors calculated for the overlapping audio recordings to select an audio type for the segment.

The method may comprise using the ambience factors calculated for the overlapping audio recordings to select an audio type for the segment by determining whether the ambience factor for the audio recordings exceeds a threshold.

The method may comprise adjusting the threshold based on an analysis of the resulting audio type sequence and determining whether the ambience factor for the audio recordings exceeds the adjusted threshold.

The method may comprise creating the composition signal for a segment of the timeline by mixing multiple audio recordings for the segment.

The method may comprise creating the composition signal for a segment of the timeline by selecting one of multiple audio recordings for the segment.

The method may comprise creating the composition signal for a segment of the timeline by downmixing one or more audio recordings for the segment to the audio type selected for the segment.

The method may comprise calculating an ambience factor for an audio recording by:

transforming the audio signal to a frequency domain representation; and

processing the frequency domain representations for multiple audio recordings and for multiple segments.

The method may comprise calculating a sound image direction for an audio recording that is of a stereo or spatial audio type.

The method may comprise determining an ambience value for each of multiple directions for an audio recording and using the ambience values for the multiple directions for a time period to calculating an ambience factor for the audio recording for the time period.

A third aspect of embodiments of the invention provides a computer program configured to control a processor to perform a method as above.

A fourth aspect of embodiments of the invention provides apparatus, the apparatus having at least one processor and at least one memory having computer-readable code stored thereon which when executed controls the at least one processor to perform Apparatus comprising:

for each of multiple segments of a timeline for which at least two time-overlapping audio recordings exist, calculating an ambience factor for each of the overlapping audio recordings for the segment;

for each of the multiple segments of the timeline, using the ambience factors calculated for the overlapping audio recordings to select an audio type for the segment; and

creating a composition signal for the timeline, the composition signal having for each segment the audio type that is selected for the segment.

A fifth aspect of embodiments of the invention provides a non-transitory computer-readable storage medium having stored thereon computer-readable code, which, when executed by computing apparatus, causes the computing apparatus to perform a method comprising:

for each of multiple segments of a timeline for which at least two time-overlapping audio recordings exist, calculating an ambience factor for each of the overlapping audio recordings for the segment;

for each of the multiple segments of the timeline, using the ambience factors calculated for the overlapping audio recordings to select an audio type for the segment; and

creating a composition signal for the timeline, the composition signal having for each segment the audio type that is selected for the segment.

Other exemplary features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

## Brief Description of the Drawings

Figure 1 shows audio scene with N capturing devices;

Figure 2 is a block diagram of an end-to-end system embodying aspects of the invention;

Figure 3 shows details of some components of the Figure 2 system according to some embodiments;

Figure 4 is a schematic diagram showing processing of audio signals according to various embodiments;

Figure 5 is a flow diagram showing processing of audio signals according to various embodiments;

Figure 6 is a diagram showing overlapping audio recordings spanning a timeline, and is used to illustrate processing of audio signals according to various embodiments; and

Figure 7 is a diagram of audio types selected for segments of a composition signal provided by the processing of audio signals according to various embodiments.

## Detailed Description of Embodiments

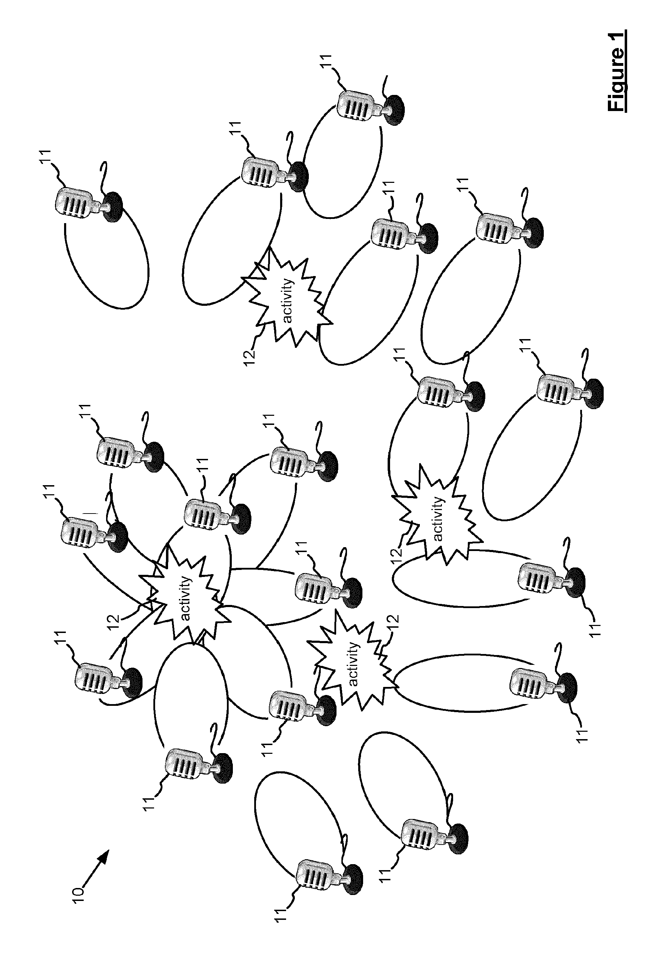

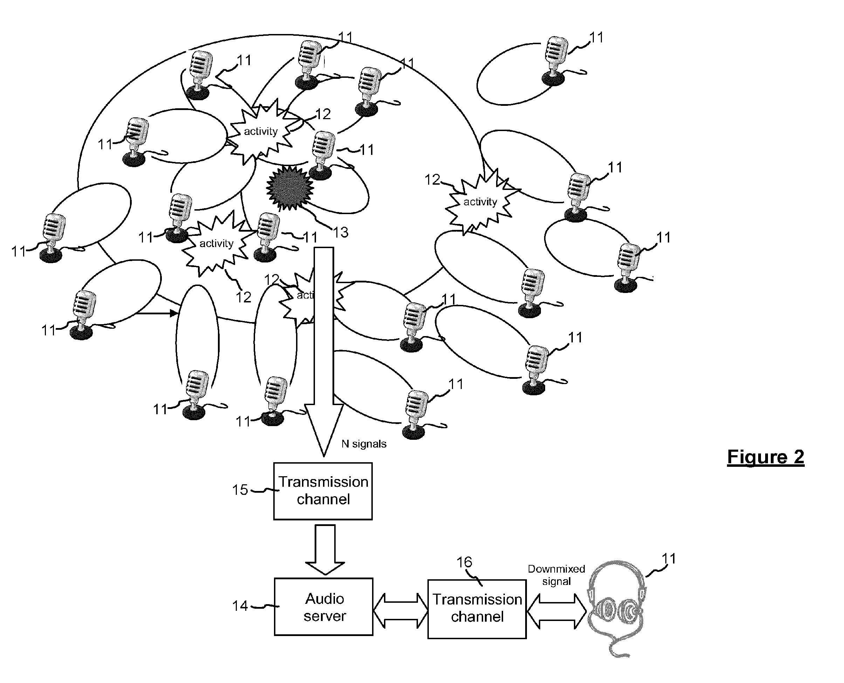

Figures 1 and 2 illustrate a system in which embodiments of the invention can be implemented. A system 10 consists of N devices 11 that are arbitrarily positioned within the audio space to record an audio scene. In these Figures, there are shown four areas of audio activity 12. The captured signals are then transmitted (or alternatively stored for later consumption) so an end user can select a listening point 13 based on his/her preference from a reconstructed audio space. A rendering part then provides one or more downmixed signals from the multiple recordings that correspond to the selected listening point. In Figure 1, microphones of the devices 11 are shown to have highly directional beam, but embodiments of the invention use microphones having any form of directional sensitivity, which includes omni-directional microphones with little or no directional sensitivity at all. Furthermore, the microphones do not necessarily employ a similar beam, but microphones with different beams may be used. The downmixed signal(s) may be a mono, stereo, binaural signal or may consist of more than two channels, for instance four or six channels.

In an end-to-end system context, the framework operates as follows. Each recording device 11 records the audio/video scene and uploads or upstreams (either in real-time or non real-time) the recorded content to an server 14 via a channel 15. The upload/upstream process may also provides also positioning information about where the audio is being recorded. It may also provide the recording direction/orientation. A recording device 11 may record one or more audio signals. If a recording device 11 records (and provides) more than one signal, the direction/orientation of these signals may be different. The position information may be obtained, for example, using GPS coordinates, Cell-ID, indoor positioning (IPS) or A-GPS. Recording direction/orientation may be obtained, for example, using compass, accelerometer or gyroscope information.

Ideally, there are many users/devices 11 recording an audio scene at different positions but in close proximity. The server 14 receives each uploaded signal and keeps track of the positions and the associated directions/orientations.

The server 14 may control or instruct the devices 11 to begin recording a scene.

Initially, the audio scene server 14 may provide high level coordinates, which correspond to locations where user uploaded or upstreamed content is available for listening, to an end user device 11. These high level coordinates may be provided, for example, as a map to the end user device 11 for selection of the listening position. The end user device 11 or e.g. an application used by the end user device 11 is has functions of determining the listening position and sending this information to the audio scene server 14. Finally, the audio scene server 14 transmits the downmixed signal corresponding to the specified location to the end user device 11. Alternatively, the server 14 may provide a selected set of downmixed signals that correspond to listening point and the end user device 11 selects the downmixed signal to which he/she wants to listen. Furthermore, a media format encapsulating the signals or a set of signals may be formed and transmitted to the end user devices 11.

Embodiments of this specification relate to enabling immersive person-to-person communication including also video and possibly synthetic content. Maturing 3D audio-visual rendering and capture technology facilitates a new dimension of natural communication. An 'all-3D' experience is created that brings a rich experience to users and brings opportunity to businesses through novel product categories.

To be able to provide compelling user experience for the end user, the multi-user content itself must be rich in nature. The richness typically means that the content is captured from various positions and recording angles. The richness can then be translated into compelling composition content where content from various users are used to re-create the timeline of the event from which the content was captured. In order to achieve accurate rendering of this rich 3D content, accurate positions of the sound recording devices are recorded.

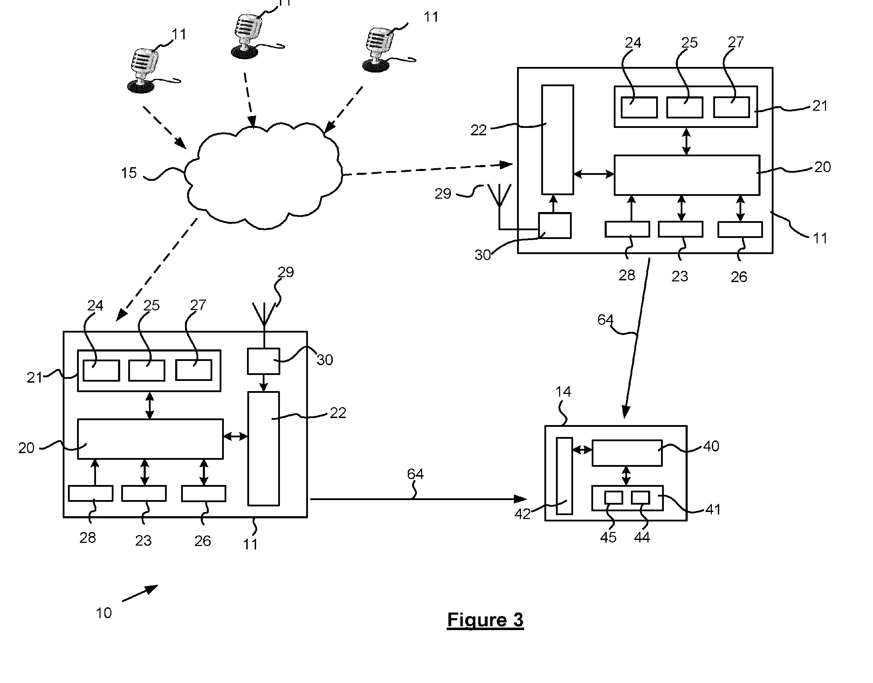

Figure 3 shows a schematic block diagram of a system 10 according to embodiments of the invention. Reference numerals are retained from Figures 1 and 2 for like elements.

In Figure 3, multiple end user recording devices 11 are connected to a server 14 by a first transmission channel or network 15. The user devices 11 are used for detecting an audio/visual scene for recording. The user devices 11 may record the scene and store it locally for uploading later. Alternatively, they may transmit the audio and/or video in real time, in which case they may or may not also store a local copy. The recorded scene may be audio media with no video, video media with no audio, or audio and video media. The audio and/or video recording shall henceforth be referred to as the "primary media". In embodiments wherein primary media is solely audio, the audio may be recorded at 48kHz. The captured audio may be encoded at a lower sampling rate, for example 32kHz to reduce the resulting file size. The user devices 11 are referred to as recording devices 11 because they record audio and/or video, although they may not permanently store the audio and/or video locally.

Each of the recording devices 11 is a communications device equipped with a microphone 23 and loudspeaker 26. Each device 11 may for instance be a mobile phone, smartphone, laptop computer, tablet computer, PDA, personal music player, video camera, stills camera or dedicated audio recording device, for instance a dictaphone or the like.

The recording device 11 includes a number of components including a processor 20 and a memory 21. The processor 20 and the memory 21 are connected to the outside world by an interface 22. The interface 22 is capable of transmitting and receiving according to multiple communication protocols. For example, the interface may be configured to transmit and receive according to one or more of the following: wired communication, Bluetooth, WiFi, and cellular radio. Suitable cellular protocols include GSM, GPRS, 3G, HSXPA, LTE, CMDA etc. The interface 22 is further connected to an RF antenna 29 through an RF amplifier 30. The interface 22 is configured to transmit primary media to the server 14 along a channel 64 which involves the interface 22 and may or may not involve the antenna 29.

At least one microphone 23 is connected to the processor 20. The microphone 23 is to some extent directional. If there are multiple microphones 23, they may have different orientations of sensitivity. The processor is also connected to a loudspeaker 26.

The processor is further connected to a timing device 28, which here is a clock. The clock 28 maintains a local time using timing signals transmitted by a base station (not shown) of a mobile telephone network. The clock 28 may alternatively be maintained in some other way.

The memory 21 may be a non-volatile memory such as read only memory (ROM) a hard disk drive (HDD) or a solid state drive (SSD). The memory 21 stores, amongst other things, an operating system 24, at least one software application 25, and software for streaming internet radio 27.

The memory 21 is used for the temporary storage of data as well as permanent storage. Alternatively, there may be separate memories for temporary and non-temporary storage, such as RAM and ROM. The operating system 24 may contain code which, when executed by the processor 20 in conjunction with the memory 25, controls operation of each of the hardware components of the device 11.

The one or more software applications 25 and the operating system 24 together cause the processor 20 to operate in such a way as to achieve required functions. In this case, the functions include processing video and/or audio data, and may include recording it.

The content server 14 includes a processor 40, a memory 41 and an interface 42. The interface 42 may receive data files and streams from the recording devices 11 by way of intermediary components or networks. Within the memory 41 are stored an operating system 44 and one or more software applications 45.

The memory 41 may be a non-volatile memory such as read only memory (ROM) a hard disk drive (HDD) or a solid state drive (SSD). The memory 41 stores, amongst other things, an operating system 44 and at least one software application 45. The memory 41 is used for the temporary storage of data as well as permanent storage. Alternatively, there may be separate memories for temporary and non-temporary storage, e.g. RAM and ROM. The operating system 44 may contain code which, when executed by the processor 40 in conjunction with the memory 45, controls operation of each of the hardware components of the server 44.

The one or more software applications 45 and the operating system 44 together cause the processor 40 to operate in such a way as to achieve required functions.

Each of the user devices 11 and the content server 14 operate according to the operating system and software applications that are stored in the respective memories thereof. Where in the following one of these devices is said to achieve a certain operation or provide a certain function, this is achieved by the software and/or the operating system stored in the memories unless otherwise stated.

Audio and or video recorded by a recording device 11 is a time-varying series of data. The audio may be represented in the primary media raw form, as samples. Alternatively, it may be represented in a non-compressed format or compressed format, for instance as provided by a codec. The choice of codec for a particular implementation of the system may depend on a number of factors. Suitable codecs may include codecs that operate according to audio interchange file format, pulse-density modulation, pulse-amplitude modulation, direct stream transfer, or free lossless audio coding or any of a number of other coding principles. Coded audio represents a time-varying series of data in some form.

The multi-user captured content is translated to composition signal(s) that provide a good, preferably the best, end user experience for each media domain (audio, video and image). For the audio domain, high quality audio signal that represents best the audio scene as captured by multiple users is required. Audio quality assessment is highly subjective, but overall quality is considered to be higher if subjective quality does not vary significantly over time. Put another way, quality is higher if segments of audio are subjectively comparable to other segments of audio. In addition, different devices have different recording capabilities. Although better recording capabilities typically give rise to higher quality audio, the location and orientation of the recording device is also a factor in quality.

In brief, embodiments of the invention provide for a relatively consistent user experience in the consumption of audio content created by multiple capturing devices recording a scene over a timeline. This is achieved by analysis of the audio content captured by the multiple capturing devices, the selection of an audio type (mono, stereo or spatial) for each of multiple segments of the timeline and the creation of a composition signal using the captured audio content and the selected audio types.

In more detail, analysis of the audio content includes determining ambience values for multiple time windows for each captured audio content that overlaps in time with other captured audio content. These ambience values are then used to calculate an ambience factor for multiple time windows, for instance as a (weighted) average of ambience values of (some or all) captured audio content for that time window. The ambience factors are then analysed to determine an optimum audio type for each time window, for instance by comparing the ambience factor to a threshold. The threshold may be derived from a maximum ambience factor. Once an optimum audio type has been determined, changes may be made so as to reduce the number of changes between different audio types that occur over the timeline.

Further details and various alternatives will now be described.

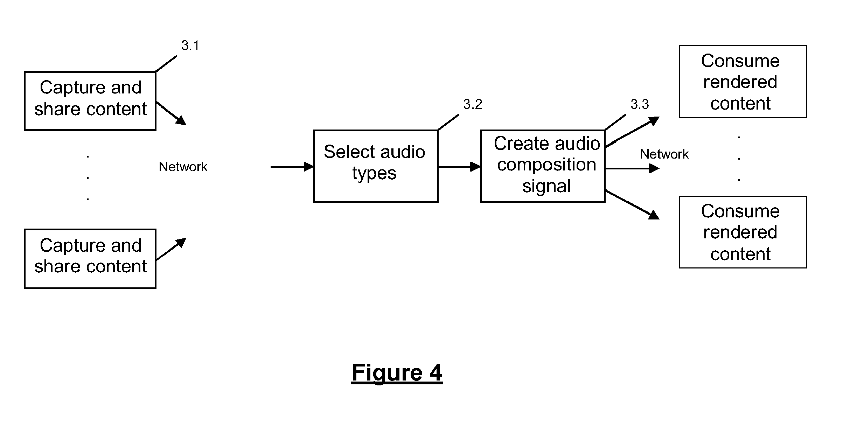

Figure 4 is a flow chart illustrating operation of the system 10 at a high level.

First, at step 3.1 the users contribute their media recordings to the system. This involves the devices 11 uploading their audio or audio-visual recordings to the server 14. Uploading may be done by file transfer after the event or may be done by real-time or near real-time streaming.

Next, in step 3.2, audio type selections are determined for the recording timeline or timelines. This step is performed by the server 14. The recordings may be from the same event space, thus they share the same timeline and space. Alternatively recordings may originate from different event spaces, in which case different timelines and spaces may be present in the recordings. Recordings that share the same timeline and space are identified by analysis, and depending on the recordings multiple audio type selections may be determined. The result of this step is one or more recording timelines and an indication of which user-contributed recordings relate to which time periods of which timeline(s), and an audio type for each time period and recording.

Finally, in step 3.3, the audio composition signal is created for the timeline and space according to determined audio type selections.

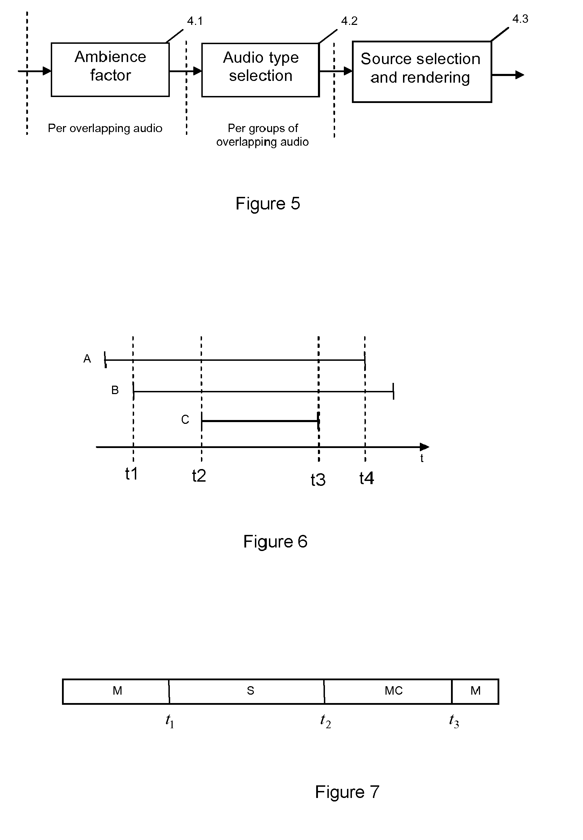

Audio type selection is shown in some detail in the flow chart of Figure 5.

First, in step 4.1, an ambience factor is determined for each overlapping media. In particular, for each audio recording that overlaps in time with at least one other audio recording, an ambience factor is determined for each of multiple segments of the timeline.

Next, in step 4.2, audio type selections are determined using groups of ambience factors as input. One audio type is selected for each segment of the timeline.

Finally, in step 4.3, the composition signal is created and rendered according to the determined audio type selection. In particular, the composition signal is continuous and for each segment of the timeline includes audio of a type selected for that segment in step 4.2. The composition signal for each segment is formed from one or more of the audio recordings that span that segment.

To aid understanding, Figures 6 and 7 relate to one example situation. Figure 6 shows an example event timeline where users have contributed three different media recordings that share the same physical space, so relate to the same scene. Figure 7 shows an example for the audio type selection for this particular timeline and space.

The relative timings of the recordings are shown in Figure 6. Recording A starts first followed shortly by recording B at time t1, and finally recording C starts at a later time $t_2$. Recording C ends at time $t_3$ and recording A ends at time $t_4$. Recording B ends at a later time.

An ambience factor is first determined for each source that covers overlapping media. Thus, recording A is analysed for the time period that covers from the start of recording B to the end of recording A, which is t1 to t4. Recording B is analysed for the same period as recording A. Recording C is then analysed for time period that covers t2 to t3, that is its entire duration.

The composition signal achieved via the audio type selections captures the best of the available recordings and minimizes the audio data consumption and complexity. Ways in which audio type selection can be made are described later.

According to the results of the analysis in this example, the audio composition signal is best described by mono sources up to the time t1. Between time t1 and time t2, the composition signal is best described by stereo sources. Between the time t2 and time t3, the composition signal is best described by spatial audio sources. From time t3 onwards to t4, the composition signal is again best described by mono sources.

It should be noted that "mono sources" in this context indicates that based on the available recordings the audio signal is best provided as a monophonic signal, although the actual recording or recordings that are used to provide that signal can be monophonic or non-monophonic. Similarly, a stereo signal may originate from a stereo recording or from a spatial recording. A monophonic signal includes only one channel. A stereo signal includes only two channels. A spatial signal is one with more than two channels. A spatial signal may have 5, 7, 4, 3 or some other number (>2) of channels.

One way in which the subblocks of Figure 5 can be performed will now be explained in more detail, starting with determining ambience factor step 4.1.

The ambience factor for some recording $x_n$ is determined as follows.

The audio signal of the media content is first transformed to a frequency domain representation. The TF operator is applied to each signal segment according to equations (1):

$$X_n[bin,l] = TF(x_{n,bin,l,T})\qquad(1)$$

where n is the recording source index, *bin* is the frequency bin index, *l* is time frame index, T is the hop size between successive segments, and *TF()* the time-to-frequency operator.

Discrete Fourier Transform (DFT) may be used as the TF operator as can be performed using equation (2):

$$TF(x_{n,bin,l,T}) = \sum_{m=0}^{N-1}\left(win(m)\cdot x_n(m+l\cdot T)\cdot e^{-j\cdot w_{bin}\cdot m}\right)\qquad(2)$$

where $w_{bin} = \dfrac{2\cdot\pi\cdot bin}{N}$, N is the size of the TF() operator transform, and *win(n)* is a *N*-point analysis window, such as a sinusoidal, Hanning, Hamming, Welch, Bartlett, Kaiser or Kaiser-Bessel Derived (KBD) window.

To obtain continuity and smooth Fourier coefficients over time, the hop size is set to T=N/2, that is, the previous and current signal segments are 50% overlapping. Naturally, the frequency domain representation may also be obtained using DCT, MDCT/MDST, QMF, complex valued QMF or any other transform that provides frequency domain representation. Equation (1) is calculated on a frame by frame basis where the size of a frame is of short duration, for example, 20ms (typically less than 100 ms, advantageously less than 50ms).

Each frequency domain frame $X_n$ is converted to sound direction information according to equation (3), which calculates the sound image direction with respect to the centre angle for the given source signal:

$$dir_{x,n,l}(sb) = \angle(alfa\_r_{x,n,l}(sb), alfa\_i_{x,n,l}(sb))$$

$$alfa\_r_{x,n,l}(sb) = \frac{\sum\limits_{ch=0}^{nCh_n-1} cPower_{x,n,l}(sb) \cdot \cos(\phi_{n,ch})}{\sum\limits_{ch=0}^{nCh_n-1} cPower_{x,n,l}(sb)}$$

$$alfa\_i_{x,n,l}(sb) = \frac{\sum\limits_{ch=0}^{nCh_n-1} cPower_{x,n,l}(sb) \cdot \sin(\phi_{n,ch})}{\sum\limits_{ch=0}^{nCh_n-1} cPower_{x,n,l}(sb)} \quad\quad (3)$$

where $\phi_{n,ch}$ describes the microphone positions in degrees with respect to a centre angle for the $n^{th}$ source signal. The centre angle is here marked to be at the magnetic north when using compass plane as a reference.

It may be advantageous to calculate Equation (3) for stereo channel configuration in cases where the number of channels in the source exceeds 2-channel configuration. In this case downmixing to 2-channels representation for the source signal is first obtained, using any suitable methods.

In addition,

$$cPower_{X,n,l}(sb) = \sum\limits_{bin=sbOffset[sb]}^{sbOffset[sb+1]-1} |X_n(bin,l)|^2 \quad\quad (4)$$

where *sbOffset* describes the frequency band boundaries that are to be covered by equation (4). The boundaries may be, for example, linear or perceptually driven. Non-uniform frequency bands are preferred to be used as they more closely reflect the auditory sensitivity of the human auditory system, which operates on a pseudologarithmic scale.

The non-uniform bands may follow the boundaries of the equivalent rectangular bandwidth (ERB) bands.

Equation (4) is repeated for $0 \leq sb < nSB$, where $nSB$ is the number of frequency bands defined for the frame. The value of $nSB$ may cover the entire frequency spectrum or only a portion of the spectrum. The value of $nSB$ may cover only the low frequencies. This can be advantageous since these frequencies typically carry the most relevant information about the audio scene.

Next, each subband within $X_n$ is transformed into an ambience value or, put another way, an ambience value is calculated for each subband. This transformation is calculated by considering multiple successive sound direction values (of a subband) and determining single ambience value from those direction values. The duration of the analysis window that covers the successive direction values advantageously is much higher than the length of the frame, say 500ms. It may be advantageous that the neighbouring windows are overlapping (say 50%).

Let y be the direction values for the current analysis window. The ambience value for y is determined using equation (5):

$$amb\_val_y = \sqrt{\frac{1}{length(y)-1} \cdot \sum\limits_{i=0}^{length(y)-1} (y(i)-\bar{y})^2}, \quad \bar{y} = \frac{1}{length(y)} \cdot \sum\limits_{i=0}^{length(y)-1} y(i) \quad\quad (5)$$

where length(y) returns the number of samples present in vector y.

Equation (5) is repeated for each analysis window and subband within $dir_{x,n,l}$.

Next, the ambience values belonging to overlapping time segment t are converted to ambience factor using equation (6):

$$amb_{t,w} = \frac{1}{length(ambs_{t,w})} \cdot \sum_{i=0}^{length(ambs_{t,w})-1} ambs_{t,w}(i) \qquad (6)$$

where $ambs_{t,w}$ contains ambience values for analysis window index $w$ for the time segment $t$.

In summary, Equation (6) determines the ambience factor as a mean of all ambience values from all overlapping media covering all subbands (within the analysis window).

The media that are included in the calculations of Equation (6) may be weighted according to its properties with respect to other media. For example, all mono audio signals may be weighted with respect to their share in the total media amount. If the segment has three media and one of those is mono, then the weight for the mono media is 0.33 (one third). This weighting can be changed depending on the importance of certain types on audio types in the composition signal. Similarly, the subbands of media may be weighted such that more importance is put on the lower bands since those typically are subjectively more important.

The audio recordings that are considered for the ambience factor calculations may be limited such that only high quality recordings are considered. In this case, the subblock 4.1 is preceded by quality analysis that discards those recordings (or segments from recordings) that are known to be of poor quality. The quality analysis may use methods known in the art such as saturation analysis. The recordings disqualification may also be a combination of quality and sensor analysis. For example, a device is manipulated by a user such that it is pointed in multiple different directions within a short period of time, the sound quality is most likely not optimal. Stationary recording (that is, recording where device movements are minimal) in most cases provide the best signal and it may be advantageous to utilise this property also in the audio type analysis. The device movement patterns can be determined, for example, from values that are measured by a compass, accelerometer or gyroscope sensor of the device and stored by the device during the audio recording.

The resulting ambience factor is a measure of the ambient content of the audio recording.

Ambience in the above indicates how stationary the direction of a sound is given a relative small period of time. In general, the term 'ambience' describes the spaciousness or feeling of the audio scene. It is considered that high levels of ambience equates to a high end user experience. Put another way, it is considered that users prefer ambient signal over monotonic content.

Ambience assessment *per se* can be subjective. However, an ambience factor can be calculated in an automated manner without any involvement of subjectivity. The equations described above first determine the primary sound direction of a signal for each given time period and then analyse how the primary sound direction varies over time compared to a sound direction calculated at a particular time instant (using a short duration analysis window) within the same time period. High variation is interpreted as high ambience. The ambience factor calculated for a given signal as described above is a good representation of the subjective ambience as may be assessed by an informed user. As such, calculating the ambience factor in the manner described above can provide a measure of what would ordinarily be described as a signal ambience quality.

The directivity in the calculated ambience factor values is important since a low directivity indicates that the sound scene is constantly changing its position. Such may be considered by users to be annoying.

At step 4.2, the ambience factor is used as a basis for the audio type selection. For each time segment t, the corresponding ambience factor values are analysed and a decision is made about the audio type.

The selection/decision may be made using a 2-pass analysis. In the first phase, a decision is made whether the time segment belongs to a mono source or to a non-mono source. In the second phase, time segments assigned to non-mono source are further analysed to separate them into stereo or spatial sources. One example of this two-pass analysis will now be described.

The first phase is performed such that the maximum ambience factor is first determined from the timeline values and downscaled to a value $t_{amp} = scale \cdot max_{amp}$ where $max_{amp}$ is the maximum ambience factor, and $amp_{scale}$ is some implementation dependent scaling value (say 1dB). Next, all those ambience factor indices are marked as non-mono if the ambience factor on that index exceeds $t_{amp}$, otherwise that index is marked as mono. If the durations of the mono and non-mono periods are too short, i.e. the number of consecutive segments of the same type is too low, then the scaling value may be lowered and the step is then repeated. This process is repeated until the duration distance (length of period) of mono versus non-mono segments is reasonably long. In addition, it may be advantageous to remove mono segments that are between non-mono segments and where the duration of the period provided by the mono segments is too small (for instance less than a few seconds), and vice versa. These features help to reduce the number of changes between mono and non-mono in the final composition signal.

The second phase is performed such that the sound direction is calculated for those audio sources that use spatial recording. The sound direction is calculated according to equation (3) but now the channel number is not limited to 2-channel. For each analysis window index, the sound direction differences are calculated and this information is used to decide if the corresponding index should be marked as stereo or spatial. For example, if the sound direction differences cover more than a quadrant in a compass plane, that is, sounds originate from directions that are at least 45° apart, then that index should be marked as spatial, otherwise as stereo. Some filtering/post-processing may be used to remove/add audio type selections, similar to the first phase.

At this point, the audio type selection is available for the whole of the timeline and the final task is to prepare the actual composition signal, which is performed at step 4.3.

For each time period, the audio signal is generated based on the defined audio type. The actual audio signal used (in the composition signal) may be a combination from all the media recorded for a segment but rendered to the audio type that is selected for the segment. Alternatively, the composition signal may be generated from the media for the segment that provide the best sound quality. Advantageously, emphasis may be put on those media that already are of same audio type. In particular, media of the selected audio type is weighted such as to be more likely to be selected for inclusion in the composition signal.

A number of options for selecting audio signals to be included in a segment of a composition signal will now be described. Some of these options involving mixing multiple audio signals together to provide the segment of the composition signal, and others involve selecting only one audio signal for providing as the segment of the composition signal.

In a first option, all audio signals within the audio type selection segment are rendered such as to use the selected audio type. Put another way, all of the content is converted to the selected audio type before mixing.

In a second option, all signals that are of same type as the selected audio type are selected for mixing together to form the composition signal.

In a third option, all the signals that have a number of channels equal to or higher than the selected audio type are selected for mixing together to form the composition signal. Put another way, all the signals that are the same or a higher audio type as the selected audio type are selected for mixing together to form the composition signal.

In a fourth option, all the signals that have a number of channels equal to or higher than the selected audio type and that are determined to be absent of quality artifacts are selected for mixing together to form the composition signal. Put another way, all the artifact absent signals that are the same or a higher audio type as the selected audio type are selected for mixing together to form the composition signal. The detection of artifacts in audio signals, for the purpose of identifying signals for exclusion from the composition signal, may be performed in any suitable way.

In the above four options, plural audio signals are selected and mixed together when forming the segment of the composition signal.

In a fifth option, a determination is made as to the audio signal that has the highest quality of the audio signals that have a number of channels equal to or higher than the selected audio type. The determined audio signal is then selected to provide as the composition signal. There is no mixing of signals for the segment of the composition signal for this option. The assessment of quality here involves any suitable measure of quality (other that an assessment of ambience) and may be performed in any suitable way.

Where there is only one audio recording (of sufficiently high quality) for a given time segment, that sole audio recording is used in the composition signal. The audio type for that recording may be the audio type in which the recording was made. If the audio type for the recording has more channels than the selected audio type for the segment, the recording is downmixed to a type with fewer channels, to match the selected audio type (e.g. it may be downmixed from spatial to stereo or from stereo to mono). If the audio type for the recording has fewer channels than the selected audio type for the segment, the recording is upmixed to a type with more channels, to match the selected audio type (e.g. it may be upmixed from stereo to spatial or from mono to stereo). Upmixing and downmixing, if needed, can be performed in any suitable way, and various methods are known. However, generally the audio type selection process will not select an audio type that is higher than the audio type of the suitable audio recordings so upmixing will generally not be needed.

After the media have been selected, the composition signal is formed from the media, in the selected audio type, for each segment of the timeline.

Once the composition audio signal is ready, it can be delivered to an end user or made available for users to download it when needed. Details of content delivery and consumption do not need to be described here. The overall end-to-end framework may be a traditional client-server architecture, where the server resides at the network, or an ad-hoc type of architecture where one of the capturing devices may act as a server.

In the above, the time segments t are of the same length and are contiguous such as to span the entire timeline without overlap. Alternatively, the time segments may be of different lengths, although this may complicate the algorithms needed. Advantageously, audio recordings for a time segment are processed only if the audio recording spans the whole segment, i.e. an audio recording that starts or ends part way through a segment is ignored for that segment.

In the above, the frequency and number of changes between mono and non-mono audio type in the composition signal is kept suitably low by varying a threshold against which an ambience factor is compared. Alternatively, a similar result may be achieved in a different way. For instance, an initial audio type may be initially selected for each segment and then a filter applied such that a change from one audio type to another is effected only if a change in the initial audio type from the another type back to the one audio type is not found within a certain timeframe, for instance represented in terms of a number of segments. In this way, a change from mono to stereo may not be effected in the composition signal if the initial audio type changes from stereo to mono within 150 segments from the change from mono to stereo.

The above embodiments separate audio format from audio quality in the sense that first the spatial characteristics of the composite signal are determined and, after that, the selection of best audio sources to fulfil that criterion is made.

Additionally, the ambience factor and audio type selection results may be used in analysis of the audio recordings (and possibly also related content) for the purpose of selecting segments to use in a summary of the recorded scene....

Here, the entire audio scene may be captured by only one recording device, or it may be captured by multiple recording devices for at least a proportion of the timeline covering the scene. The content segmentation results are used to provide a summary of the captured content. For example, segments that are marked of as stereo or spatial are more likely to contain useful information and therefore those segments are given priority over mono segments when determining which time segments from the content to select for the summary content. The summary could use only the segmentation results from single user, or segmentation results covering group of users or all users could be used to make the summary.

Furthermore, the content segmentation using the audio analysis could be combined with other segmentation scenarios such as compass analysis, to make a determination as to which time segments are important and should be selected for inclusion in the summary content.

An alternative approach uses the type selection as a base segmentation and then uses other analysis dimensions (sensor, video, etc) to supplement the base segmentation. This can allow automated or semi-automated location of the best moments for the user. A further alternative approachuses the other analysis dimensions to provide the base segmentation and the type selection then defines the selections of segments for the final segmentation.

Although in the above example there are three recordings that relate to the same scene and timeline, this is merely illustrative. The number of recordings may take any value. For a large concert or festival, for instance, there may be tens of recordings relating to the same scene and timeline.

One particular algorithm for calculating ambience factor is described above, but it will be appreciated that there are various options for calculating ambience factor values and that there are many algorithms that could be constructed and which would be suitable for the purpose or creating a composition signal as described above.

Ambience in the above indicates how stationary the direction of a sound is given a relative small period of time. The equations described above first determine the primary sound direction of a signal for each given time period and then analyse how the primary sound direction varies over time compared to a sound direction calculated at a particular time instant (using a short duration analysis window) within the same time period. High variation is interpreted as high ambience.

Although in the above ambience values are calculated for each of multiple directions of a recording, instead only one ambience value, either relating to one particular direction or not relating to a direction, is used in some embodiments. This difference can reduce the processing required although can be at the detriment of the quality of the resulting composition signal.

Sound direction, for ambience measurement, is best described in the frequency domain but alternative methods can instead calculate ambience based on energy differences between time domain channels. A further alternative method for determining a measure of ambience uses Principal Component Analysis (PCA).

Numerous positive effects and advantages are provided by the above described embodiments of the invention.

An effect of the above-described embodiments is the possibility to improve the resultant rendering of multi-user scene capture due to the intelligent audio type selection. This can allow an experience that creates a feeling of immersion, where the end user is given the opportunity to listen/view different compositions of the audio-visual scene. In addition, this can provided in such a way that it allows the end user to perceive that the compositions are made by people rather than machines/computers, which typically tend to create quite monotonous content.

The invention is not limited to the above-described embodiments and various alternatives will be envisaged by the skilled person and are within the scope of this invention.

**Claims**

**1.** A method comprising:

for each of multiple segments of a timeline for which at least two time-overlapping audio recordings exist, calculating an ambience factor for each of the overlapping audio recordings for the segment;

for each of the multiple segments of the timeline, using the ambience factors calculated for the overlapping audio recordings to select an audio type for the segment; and

creating a composition signal for the timeline, the composition signal having for each segment the audio type that is selected for the segment.

2. A method as claimed in claim 1, wherein the audio type is indicative of a number of audio channels.

3. A method as claimed in claim 1 or claim 2, comprising creating the composition signal with different audio types for different segments of the timeline.

4. A method as claimed in any of claims 1 to 3, comprising analysing audio recordings to identify low quality audio recordings and/or audio recordings including artifacts and disregarding any such identified audio recordings when using the ambience factors calculated for the overlapping audio recordings to select an audio type for the segment.

5. A method as claimed in any of claims 1 to 4, comprising using the ambience factors calculated for the overlapping audio recordings to select an audio type for the segment by determining whether the ambience factor for the audio recordings exceeds a threshold.

6. A method as claimed in claim 5, comprising adjusting the threshold based on an analysis of the resulting audio type sequence and determining whether the ambience factor for the audio recordings exceeds the adjusted threshold.

7. A method as claimed in any of claims 1 to 6, comprising creating the composition signal for a segment of the timeline by mixing multiple audio recordings for the segment.

8. A method as claimed in any of claims 1 to 7, comprising creating the composition signal for a segment of the timeline by selecting one of multiple audio recordings for the segment.

9. A method as claimed in any of claims 1 to 8, comprising creating the composition signal for a segment of the timeline by downmixing one or more audio recordings for the segment to the audio type selected for the segment.

10. A method as claimed in any of claims 1 to 9, comprising calculating an ambience factor for an audio recording by:

transforming the audio signal to a frequency domain representation; and
processing the frequency domain representations for multiple audio recordings and for multiple segments.

11. A method as claimed in any of claims 1 to 10, comprising calculating a sound image direction for an audio recording that is of a stereo or spatial audio type.

12. A method as claimed in any of claims 1 to 11, comprising determining an ambience value for each of multiple directions for an audio recording and using the ambience values for the multiple directions for a time period to calculating an ambience factor for the audio recording for the time period.

13. A computer program configured to control a processor to perform a method as claimed in any one of claims 1 to 12.

14. An apparatus configured to perform the method according to any of the claims 1 to 12.

**Figure 1**

N signals

Transmission channel 15

Audio server 14

Transmission channel 16

Downmixed signal

activity 12

activity 13

Figure 2

EP 2 874 414 A1

EP 2 874 414 A1

**Figure 3**

**Figure 4**

Figure 5

Figure 6

Figure 7

Europäisches
Patentamt

European
Patent Office

Office européen
des brevets

## EUROPEAN SEARCH REPORT

Application Number

EP 14 19 1992

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/297054 A1 (OJANPERAE JUHA [FI]) 7 November 2013 (2013-11-07) * paragraph [0001] - paragraph [0057] * * paragraphs [0089], [0108], [0109] * ----- | 1-14 | INV. H04S7/00 |
| A | US 2013/294749 A1 (BURNS ERIC [US]) 7 November 2013 (2013-11-07) * figure 3 * ----- | 1-14 | |

TECHNICAL FIELDS
SEARCHED (IPC)

H04S
G11B
G10L
H04N

The present search report has been drawn up for all claims

| Place of search | Date of completion of the search | Examiner |
|---|---|---|
| Munich | 9 April 2015 | Moscu, Viorel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 1992

09-04-2015

| Patent document cited in search report | Publication date | Patent family member(s) | Publication date |
|---|---|---|---|
| US 2013297054 A1 | 07-11-2013 | EP 2666309 A1<br>US 2013297054 A1<br>WO 2012098427 A1 | 27-11-2013<br>07-11-2013<br>26-07-2012 |
| US 2013294749 A1 | 07-11-2013 | NONE | |

EPO FORM P0459